# EUROPÄISCHE PATENTANMELDUNG

(11) **EP 1 470 950 A2**
(43) Veröffentlichungstag der Anmeldung: **27.10.2004**
(21) Anmeldenummer: 04090132.4
(22) Anmeldetag: 05.04.2004
(51) Int. Cl.: B60N 2/06, B60N 2/64, B60N 2/30

(54) **Fahrzeugsitz**

(30) Priorität: 25.04.2003 DE 10319884
(71) Anmelder: Volkswagen Aktiengesellschaft, 38436 Wolfsburg (DE)
(72) Erfinder: Eichhorn, Ulrich Dr., 38440 Wolfsburg (DE); Siebeneich, Alexander, 38448 Wolfsburg (DE); Mindt, Andreas, 38173 Erkerode (DE); Eschment, Karsten, 38440 Wolfsburg (DE)
(74) Vertreter: Schneider, Henry, Dipl.-Ing.

(57) **Zusammenfassung**

Die Erfindung betrifft eine Sitzanordnung (100) in einem Fahrzeug, insbesondere in einem Micro-Kompaktfahrzeug, die mindestens eine einsitzige Vordersitzbank (200') und mindestens eine zweisitzige Rücksitzbank (300") aufweist, wobei Vordersitzbank (200) und Rücksitzbank (300) jeweils mindestens einen Grundkörper-Sitzteil (2A) und mindestens einen Grundkörper-Rückenlehnenteil (1A) und eine weitere Sitzanordnung (100) die mindestens eine einsitzige Vordersitzbank (200') und mindestens eine zweisitzige Rücksitzbank (300") aufweist, wobei die zweisitzige Rucksitzbank (300") mindestens zwei quer zu einer Fahrtrichtung angeordnete Einzelsitze aufweist.

Es ist vorgesehen, dass die mindestens eine zweisitzige Rücksitzbank (300") durch auf dem Grundkörper-Rückenlehnenteil (1A) und/oder auf dem Grundkörper-Sitzteil (2A) angeordnete bewegliche Teile (1C, 2C, 3A, 4A, 5A, 6A, 7A, 8A, 9A) im Wesentlichen so veränderbar ist, dass aus einer zweisitzigen Rücksitzbank (300") eine einsitzige Rücksitzbank (300') und umgekehrt ausbildbar ist, und dass die zweisitzige Rücksitzbank (300") durch ein bewegliches Einzelsitz-Auflageteil (11A) durch seitliches Verschwenken auf einen karosseriefesten Einzelsitz (11 D) in eine einsitzige Position (P') zu einer einsitzigen Rücksitzbank (300') reversibel überführbar ist.

Die Erfindung betrifft ferner eine Sitzbank, insbesondere Rücksitzbank, die mindestens einen Grundkörper-Sitzteil und mindestens einen Grundkörper-Rückenlehnenteil umfasst und eine Sitzbank, insbesondere Rücksitzbank, die zwei quer zur Fahrtrichtung an der Karosserie angeordnete Einzelsitze umfasst.

Hier ist vorgesehen, auf dem Grundkörper-Rückenlehnenteil (1A) und/oder auf dem Grundkörper-Sitzteil (2A) bewegliche Teile (1C, 2C, 3A, 4A, 5A, 6A, 7A, 8A, 9A), die im Wesentlichen eine Umwandlung der zweisitzigen Rücksitzbank (300") zu einer einsitzigen Rucksitzbank (300') ermöglichen, anzuordnen oder es ist vorgesehen, dass mindestens ein Einzelsitz (11D) karosseriefest an einem Grundkörper-Rückenlehnenteil (1A) angeordnet ist und mindestens ein seitlich verschwenkbares Einzelsitz-Auflageteil (11A) auf den karosseriefesten Einzelsitz (11D) schwenkbar ist.

## Beschreibung

Die Erfindung betrifft eine Sitzanordnung mit den im Oberbegriff der Ansprüche 1 und 37 sowie eine Sitzbank, insbesondere Rücksitzbank, mit den im Oberbegriff der Ansprüche 4 und 40 genannten Merkmalen.

Es ist bekannt, die Rückenlehnen, insbesondere einer Rücksitzbank, mit einer integrierten Durchlademöglichkeit auszurüsten. Diese geteilten Rücksitzbänke sind dann zumeist entweder im Verhältnis 2/3 zu 1/3 geteilt umklappbar. Um den Innenraum eines Kraftfahrzeuges intelligent zu nutzen, sind eine Vielzahl von Verstellmöglichkeiten und Konfigurationen im Rücksitzbereich von Kraftfahrzeugen bekannt.

So sind Fahrzeugsitze, insbesondere die hinteren Sitzreihen eines Kraftfahrzeuges, zur Gewinnung eines zusätzlichen Nutzraumes für den Gütertransport klappbar und verschiebbar gestaltet. Hierzu gibt es verschiedene Anordnungen, die ein Umlegen, Zurückklappen oder Hochklappen der Teile eines Fahrzeugsitzes ermöglichen, um innerhalb des Fahrzeuges das Volumen für den Transport von Gütern zu vergrößern. Die Fahrzeugsitze können dabei, in Abhängigkeit von der Ausführung der Klappvorrichtung, in eine vordere Position verschoben und zusammengeklappt werden oder sie können mit dem Sitzteil zum Fahrzeugboden hin verschwenkt und/oder flach aufgeklappt werden.

Weitere bekannte flexible Sitzsysteme weisen eine Anzahl von Einzelsitzen auf. Für Transporte lassen sich die Lehnen beispielsweise von drei hinteren Sitzen zum Beispiel einzeln umklappen, die Sitze komplett hochklappen oder einzeln herausnehmen. Zum Umwandeln beispielsweise eines Fünfsitzers in einen Viersitzer ist der mittlere Sitz nach hinten wegklappbar sowie die beiden äußeren Sitze nach hinten und zur Mitte hin verschiebbar.

Diese verschiedenen Varianten eignen sich vor allem für Van und Mini-Kompaktfahrzeuge, die einen relativ großen Innenraum und eine ausreichende Innenraumhöhe aufweisen, da die notwendigen Einrichtung zur Umwandlung des Kraftfahrzeugsitzes einen gewissen Mindestbauraum benötigen. Für kleine Fahrzeuge aus dem Fahrzeugsegment der so genannten Micro-Kompaktfahrzeug-Klasse sind diese Lösungen zumeist aufgrund des geringeren zur Verfügung stehenden Raumangebotes kaum anwendbar. Ferner sind diese Lösungen auch relativ aufwendig, da diese technischen Lösungen eine Vielzahl von Vorrichtungselementen benötigen.

Der Erfindung liegt die Aufgabe zugrunde eine Sitzanordnung und eine Sitzbank, insbesondere eine Rücksitzbank, vorzugsweise für die Micro-Kompaktfahrzeug-Klasse, die nur einen begrenzten kleinen Innenraum aufweist, zu schaffen, die trotz geringem Platzangebot möglichst komfortable und variable Sitzplatzpositionen anbietet.

Diese Aufgabe wird durch Sitzanordnungen mit den in Anspruch 1 und 37 genannten Merkmalen gelöst. Dadurch, dass mindestens eine zweisitzige Rücksitzbank durch auf einem Grundkörper-Rückenlehnenteil und/oder auf einem Grundkörper-Sitzteil angeordnete bewegliche Teile im Wesentlichen so veränderbar ist, dass aus einer zweisitzigen Rücksitzbank eine einsitzige Rücksitzbank und umgekehrt ausbildbar ist, oder dadurch, dass die zweisitzige Rücksitzbank durch ein bewegliches Einzelsitz-Auflageteil durch seitliches Verschwenken auf einen karosseriefesten Einzelsitz in eine einsitzige Position zu einer einsitzigen Rücksitzbank und umgekehrt überführbar ist, wird in vorteilhafter Weise sichergestellt, dass trotz geringem Raumangebot eine unterschiedliche Sitzanordnung erreichbar ist. So ist beispielsweise ein "Dreisitzer" mit einer einsitzigen Vordersitzbank/Vordersitz und einer zweisitzigen Rücksitzbank leicht ohne großen konstruktiven Aufwand zu einem "Zweisitzer" mit einer einsitzigen Rücksitzbank und der unveränderten Vordersitzbank beziehungsweise dem Vordersitz umbaubar.

Die Aufgabe wird ferner durch eine Sitzbank, insbesondere Rücksitzbank, mit den in Anspruch 4 und 40 genannten Merkmalen gelöst. Dadurch, dass auf einem Grundkörper-Rückenlehnenteil und/oder auf einem Grundkörper-Sitzteil angeordnete bewegliche Teile im Wesentlichen eine Umwandlung der zweisitzigen Rücksitzbank zu einer einsitzigen Rücksitzbank und umgekehrt ermöglichen oder mindestens ein Einzelsitz karosseriefest an dem Grundkörper-Rückenlehnenteil angeordnet ist und mindestens ein seitlich verschwenkbares Einzelsitz-Auflageteil auf den karosseriefesten Einzelsitz schwenkbar ist, wurde eine Sitzbank geschaffen, die einfachst durch unterschiedliches Anordnen von beweglichen Teilen oder einem Einzelsitz-Auflageteil so variabel gestaltet ist, dass aufwendige Sitzkonstruktionen und Sitzunterkontruktionen, die bei dem geringen Raumangebot kaum realisiert werden können, verzichtbar sind.

In bevorzugter Ausgestaltung der Erfindung werden somit verschiedene Sitzanordnungen dadurch erreicht, dass die Sitzbank, insbesondere die Rücksitzbank, umgestaltbar ist. Grundsätzlich sind die Lösungen jedoch auch auf alle Sitzbänke, Vordersitzbänke, zweite Sitzreihen, dritte Sitzreihen und so weiter anwendbar.

Bevorzugt ist, dass die einsitzige Rücksitzbank mit der einsitzigen Vordersitzbank dann fluchtend angeordnet ist, wenn die beweglichen Teile in einer einsitzigen Position angeordnet sind. Die fluchtende Anordnung trifft nicht zu, wenn die zweisitzige Rücksitzbank durch ein bewegliches Einzelsitz-Auflageteil durch seitliches Verschwenken auf einen karosseriefesten Einzelsitz in eine seitliche einsitzige Position zu einer einsitzigen Rücksitzbank und umgekehrt überführbar ist.

Sind die beweglichen Teile oder das bewegliche Einzelsitz-Auflageteil in einer einsitzigen Position angeordnet und bilden die einsitzige Rücksitzbank aus, ist in weiterer bevorzugter Ausgestaltung eine Sitzanordnung ausbildbar, bei der sich seitlich der einsitzigen Position mindestens ein Gepäckraum ausbildet. Ein solcher Gepäckraum ist dann nicht mehr ausgebildet, wenn die Sitzanordnung eine zweisitzige Rücksitzbank ausbildet, da diese Bereiche dann zur Anordnung der zweisitzigen Rücksitzbank benötigt werden. In diesem Fall ist der jeweilige Sitz der zweisitzigen Rücksitzbank auch nicht mehr fluchtend hinter dem Einzelvordersitz der Vordersitzbank angeordnet.

In bevorzugter Ausgestaltung der Erfindung ist die Sitzbank, insbesondere die Rücksitzbank, durch verschieden angeordnete bewegliche Teile von einer zweisitzigen Rücksitzbank in die einsitzige Rücksitzbank und umgekehrt umgestaltbar. Bevorzugt ist, dass auf dem Grundkörper-Sitzteil und/oder auf dem Grundkörper-Rückenlehnenteil verschiedene bewegliche Teile anordbar sind. Bevorzugte Ausführungsvarianten als bewegliche Teile sind ein einteiliges Auflageelement-Rückenlehnenteil auf dem Grundkörper-Rückenlehnenteil und/oder ein einteiliges Auflageelement-Sitzteil auf dem Grundkörper-Sitzteil. Ferner bevorzugt ist als bewegliches Teil ein elastischer Auflagekörper oder ein doppellagiger Auflagekörper oder ein zweiteiliges Auflageelement oder ein aufblasbares Auflageelement oder ein zweiteiliges drehbares Auflageelement oder ein zweiteiliges verschiebbares Auflageteil oder ein zweiteiliges klappbares Auflageelement, das sowohl auf dem Grundkörper-Rückenlehnenteil als auch auf dem Grundkörper-Sitzteil auch in Kombination anordbar ist.

Ferner bevorzugt ist, zur Umgestaltung der Rücksitzbank, eine Ausführungsvariante, die mindestens einen Einzelsitz karosseriefest an dem Grundkörper-Rückenlehnenteil anordnet und mindestens ein seitlich verschwenkbares Einzelsitz-Auflageteil aufweist, welches gegenüber dem karosseriefesten Einzelsitz so verschwenkbar ist, dass aus der zweisitzigen Rücksitzbank eine einsitzige Rücksitzbank und umgekehrt ausbildbar ist.

Die Erfindung wird schließlich durch anpassbare Kopfstützen komplettiert, so dass in jeder Position der beweglichen Teile und der damit ausgebildeten einsitzigen beziehungsweise zweisitzigen Rücksitzbank, entsprechend den Sicherheitsvorschriften im Kraftfahrzeugbereich, Kopfstützen zum Schutz der Insassen angeordnet sind.

Weitere bevorzugte Ausgestaltungen der Erfindung, ergeben sich aus den übrigen in den Unteransprüchen und der Beschreibung genannten Merkmalen.

Die Erfindung wird nachfolgend in Ausführungsbeispielen anhand der zugehörigen Zeichnungen näher erläutert. Es zeigen:
- Figur 1: eine Sitzbank in einer Ausführungsvariante mit einem einteiligen Auflageelement-Rückenlehnenteil;
- Figur 2: die Sitzbank in einer Ausführungsvariante mit einem einteiligen Auflageelement-Sitzteil;
- Figur 3: die Sitzbank in einer Ausführungsvariante mit einem elastischen Auflagekörper;
- Figur 4: die Sitzbank in einer Ausführungsvariante mit einem doppellagigen Auflagekörper;
- Figur 5: die Sitzbank in einer Ausführungsvariante mit einem zweiteiligen Auflageelement;
- Figur 6: die Sitzbank in einer Ausführungsvariante mit einen aufblasbaren Auflageelement;
- Figur 7: die Sitzbank in einer Ausführungsvariante mit einem zweiteiligen, drehbaren Auflageelement;
- Figur 8: die Sitzbank in einer Ausführungsvariante mit einem verschiebbaren Auflageteil;
- Figur 9: die Sitzbank in einer Ausführungsvariante mit einem zweiteiligen, klappbaren Auflageelement;
- Figur 10: die Sitzbank in einer Ausführungsvariante mit einem Auflagepolster;
- Figur 11: die Sitzbank in einer Ausführungsvariante mit einem Einzelsitz-Auflageteil und
- Figur 12: eine Sitzanordnung, mit einem Einzelsitz als Vordersitzbank und einer zweisitzigen Rücksitzbank, in der Ausführungsvariante gemäß Figur 11 mit dem Einzelsitz-Auflageteil.

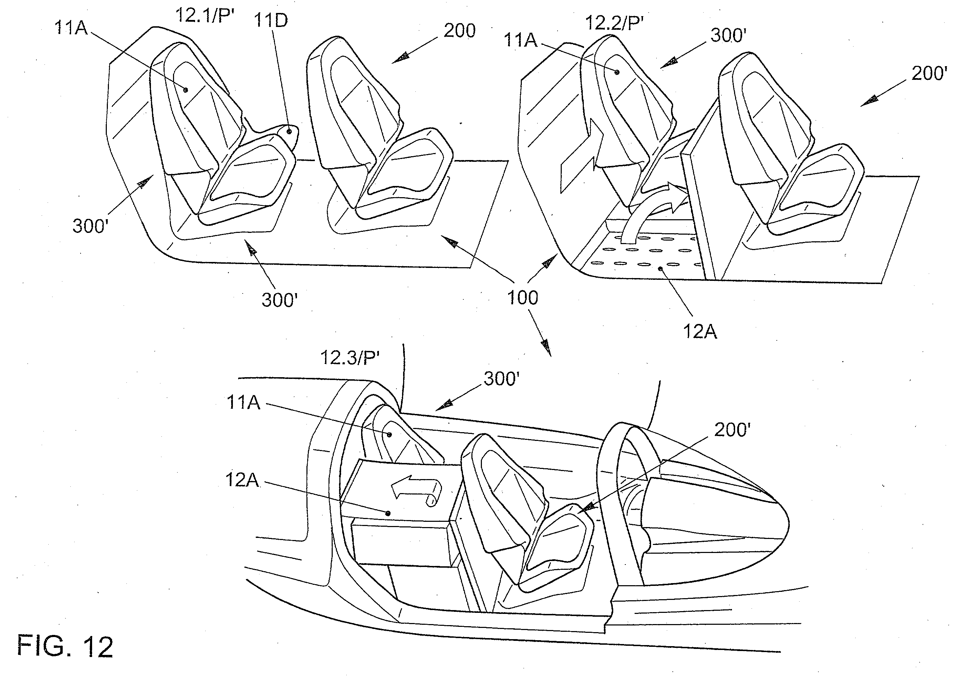

Figur 12 zeigt eine mögliche Sitzanordnung 100 und eine Möglichkeit zur Anordnung der Rücksitzbank 300 und der Vordersitzbank 200.

Die in den folgenden Figuren mit P' - einsitzige Position - gekennzeichneten Darstellungen stellen die einsitzige Vordersitzbank 200' oder die einsitzige Rücksitzbank 300' dar. Mit P" - zweisitzige Position - wird eine zweisitzige Rücksitzbank 300" dargestellt.

Gemäß Figur 12, Darstellung 12.1 ist eine Anordnung einer Rücksitzbank 300' als ein Einzelsitz nur in einer Zwischenposition fluchtend, ansonsten in der einsitzigen und zweisitzigen nicht fluchtend hinter der Vordersitzbank 200', die ebenfalls als Einzelsitz ausgeführt ist, dargestellt. Der Einzelsitz ist in Darstellung 12.1 noch nicht vollständig über einen weiteren karosseriefesten Einzelsitz 11D zu einer einsitzigen Rücksitzbank 300' verlagert. Eine vollständige Verlagerung des Einzelsitzes zu einer einsitzigen Rücksitzbank 300' zeigt die Darstellung 12.2, die zudem zeigt, dass in dem durch die Verlagerung des Einzelsitzes entstehenden Freiraum, vorzugsweise ein Bodenteil, aus einer horizontalen in eine vertikale Position klappbar ist, um eine Schutzwand zu erzeugen, so dass gemäß Darstellung 12.3 ein nach vorne durch die Schutzwand abgeschotteter und nach hinten begrenzter Gepäckraum 12A eines nun zweisitzigen Fahrzeuges entsteht.

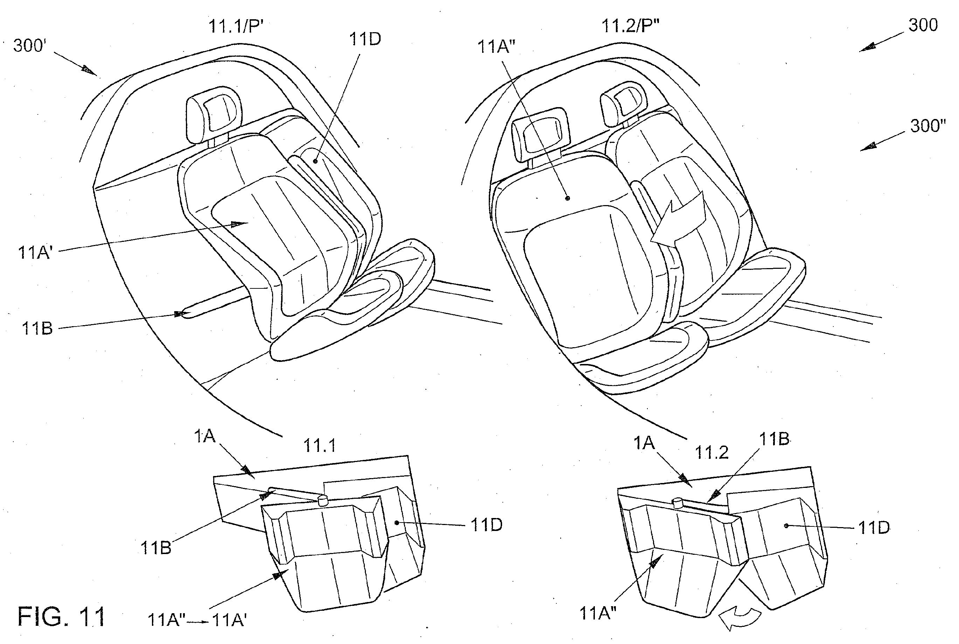

Eine detaillierte Darstellung der Verlagerung des Einzelsitzes, gemäß Figur 12.1 der Darstellungen 12.1 bis 12.3, zeigt Figur 11.

Figur 11 zeigt in einer Darstellung 11.1 die einsitzige Rücksitzbank 300' in der Phase der Umwandlung von der zweisitzigen Position P" zu der einsitzigen Position P' beziehungsweise die zweisitzige Rücksitzbank 300" in der zweisitzigen Position P".

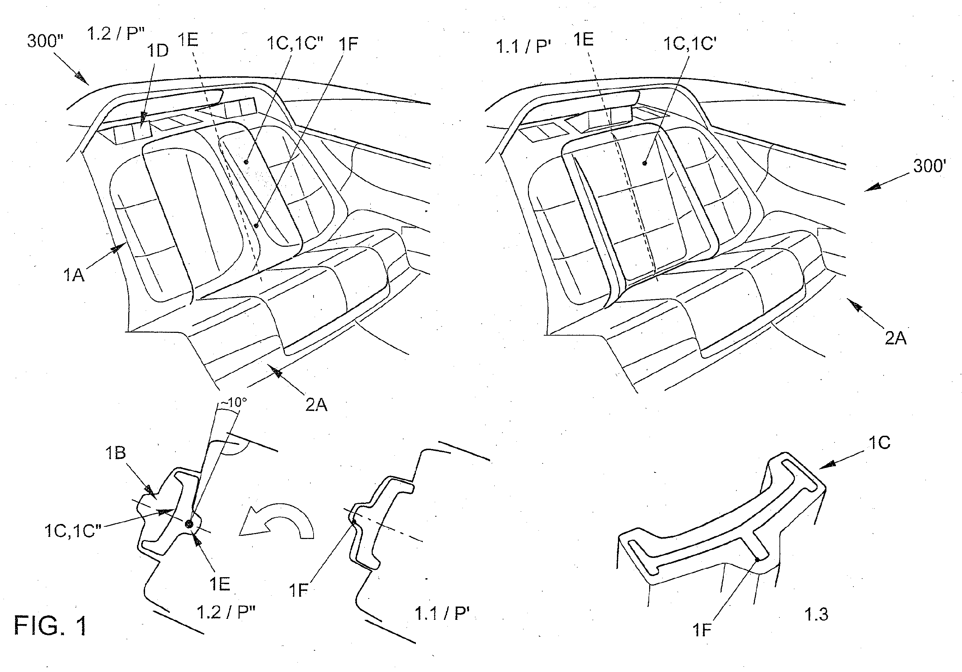

In den weiteren Figuren 1 bis 11 werden Ausführungsvarianten beschrieben, deren jeweilige bewegliche Teilen bei der Erläuterung die Zusätze (') und (") hinzugefügt, um die jeweilige Auswirkung im Bereich der Rücksitzbank zur Gestaltung der einsitzigen Position P' beziehungsweise der zweisitzigen Position P" zu verdeutlichen.

Figur 11, Darstellung 11.1 zeigt einen Grundkörper-Rückenlehnenteil 1A, der eine Schwenkführung 11B und/oder eine Schwenkvorrichtung 11C aufweist. Der bereits im Prinzip in Figur 12 dargestellte Einzelsitz wird in Figur 11 in beiden Darstellungen als Einzelsitz-Auflageteil 11A bezeichnet. In dieser Ausführungsvariante ist der verschwenkbare Einzelsitz-Auflageteil 11A aus Rückenlehnenteil und Sitzteil ausgebildet und ein Grundkörper-Sitzteil 2A ist verzichtbar. Der Grundkörper-Rückenlehnenteil 1A dient hier zur Anordnung der Schwenkführung 11B beziehungsweise der Schwenkvorrichtung 11C. Die Darstellung 11.1 in der einsitzigen Position P' zeigt, dass der Einzelsitz-Auflageteil 11A mittig am Grundkörper-Rückenlehnenteil 1A anordbar ist, so dass gemäß Darstellung 11.1 beziehungsweise 12.1, Figur 11 und 12 der Einzelsitz-Auflageteil 11A in der Zwischenposition fluchtend hinter der einsitzigen Vordersitzbank 200' angeordnet ist. Der verschwenkbare Einzelsitz-Auflageteil 11A ist gegenüber einem karosseriefesten Einzelsitz 11D in die einsitzige Position P' verschwenkbar. Die unteren Detaildarstellungen 11.1 beziehungsweise 11.2 zeigen die Verlagerung des Auflageteiles 11A aus der zweisitzigen Position 11A" in die einsitzige Position 11A' und umgekehrt. Wie aus den perspektivischen Ansichten ersichtlich, ist der Einzelsitz 11D stets karosseriefest angeordnet. Die Kopfstützen sind in dieser Ausführungsvariante der Figur 11 am jeweiligen Rückenlehnenteil des Einzelsitz-Auflageteils 11A beziehungsweise des karosseriefesten Einzelsitzes 11D befestigt und werden entsprechend mitbewegt.

In den folgenden Figuren 1 bis 9 weist die Rücksitzbank 300 ebenfalls den Grundkörper-Rückenlehnenteil 1A und den Grundkörper-Sitzteil 2A auf.

Figur 1, mit den Darstellungen 1.2 und 1.1 sowie der Einzelheit 1.3, zeigt die Teilelemente und die Rücksitzbank 300, die ein einteiliges Auflageelement-Rückenlehnenteil 1C umfasst. Das einteilige Auflageelement-Rückenlehnenteil 1C ist in eine Ausnehmung Rückenlehnenteil 1B des Grundkörper-Rückenlehnenteils 1A durch Drehung um eine vertikale Achse 1E, um 180° aus der einsitzigen Rücksitzbank 300' gemäß Darstellung 1.1 in die zweisitzige Rücksitzbank 300" gemäß Darstellung 1.2 umwandelbar. Das einteilige Auflageelement-Rückenlehnenteil 1C weist eine Aufwölbung-Rückenlehnenteil 1F auf. Die Aufwölbung-Rückenlehnenteil 1F des einteiligen Auflageelement-Rückenlehnenteils 1C bildet in der zweisitzigen Position P" die mittlere Trennung der zweisitzigen Rücksitzbank 300" aus. In der einsitzigen Position P' des einteiligen Auflageelement-Rückenlehnenteils 1C' ist die Aufwölbung-Rückenlehnenteil 1F in der Ausnehmung Rückenlehnenteil 1B anordbar. Das einteilige Auflageelement-Rückenlehnenteil 1C ist in der Darstellung 1.3 in der Einzelheit nochmals dargestellt und zeigt im linken und rechten Randbereich hervorstehende Bereiche, die bei dem einteiligen Auflageelement-Rückenlehnenteil 1C" in der Ausnehmung Rückenlehnenteil 1B verschwinden und in der Position als einteiliges Auflageelement-Rückenlehnenteil 1C' als Seitenhaltelemente der einsitzigen Rücksitzbank 300' dienen. In den Darstellungen 1.1 und 1.2 sind zudem Kopfstützen 1D dargestellt, die passend zu den Positionen P', P" im Grundkörper-Rückenlehnenteil 1A angeordnet sind und je nach den Positionen P', P" ausklappbar beziehungsweise einklappbar gestaltet sind.

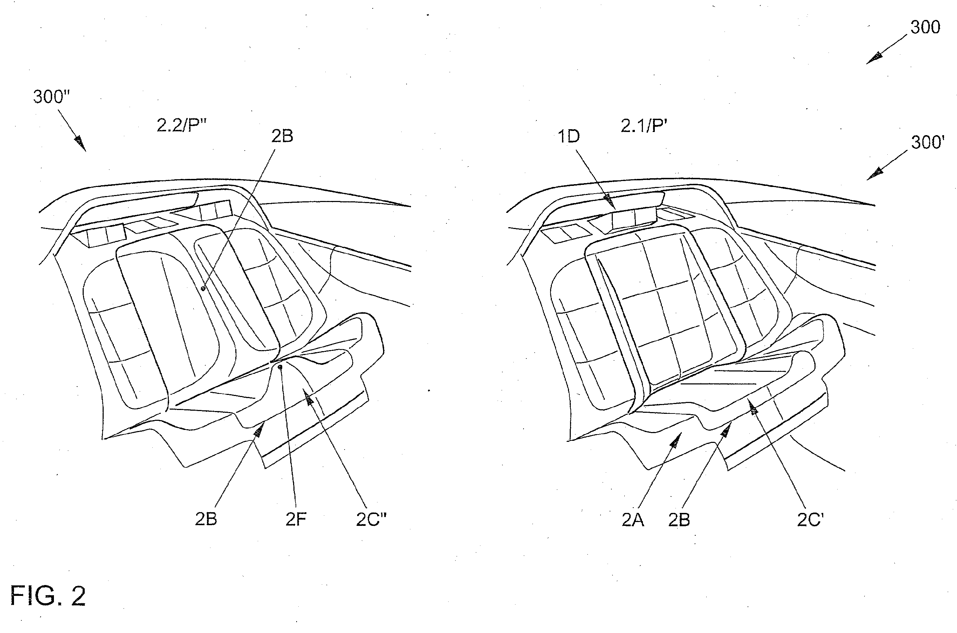

Eine analoge Lösung zur Figur 1 zeigt Figur 2, bei der ein einteiliges Auflageelement-Sitzteil 2C in dem Grundkörper-Sitzteil 2A in einer Ausnehmung Sitzteil 2B angeordnet ist. Wie die Darstellung 2.2 der Figur 2 zeigt, ist durch Anordnung des einteiligen Auflageelement-Sitzteils 2C" mit zum Sitzbenutzer gerichteter Aufwölbung-Sitzteil 2F, eine zweisitzige Rücksitzbank 300" ausbildbar. Gemäß der Darstellung 2.1 der Figur 2, mit zum Sitzbenutzer gerichteter, im Wesentlichen u-förmiger Ausbildung des einteiligen Auflageelementes 2C' durch Wenden des einteiligen Auflageelement-Sitzteils 2C' ist eine einsitzige Rücksitzbank 300' ausbildbar.

Die entsprechende Ausnehmung Sitzteil 2B ist in Figur 2 nicht näher dargestellt. Sie entspricht jedoch im Wesentlichen der Ausnehmung Rückenlehnenteil 1B, die detailliert in Figur 1 dargestellt und beschrieben ist.

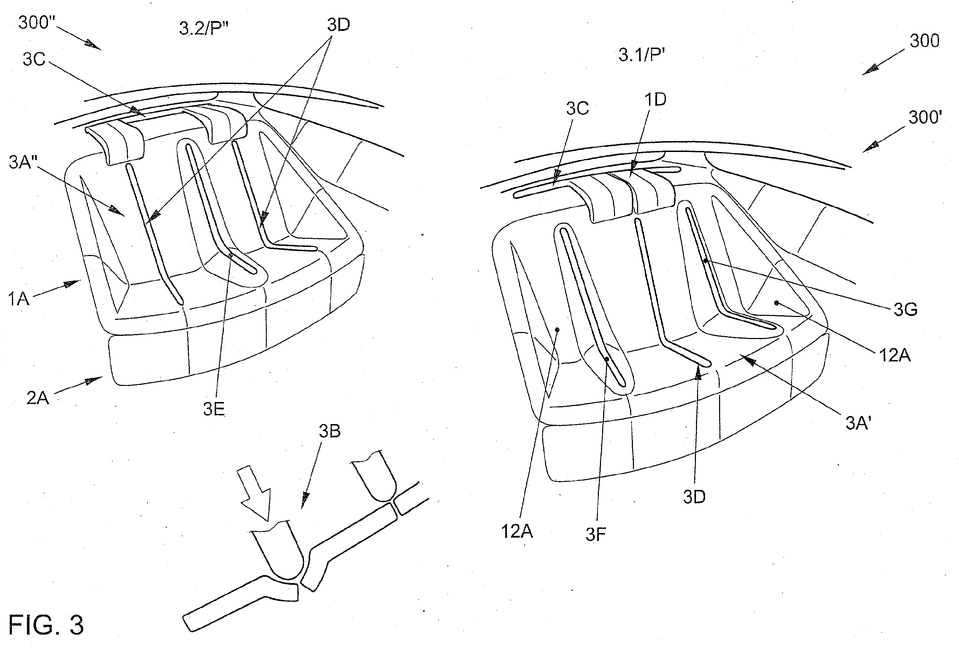

Figur 3, mit den Darstellungen 3.1 und 3.2 der einsitzigen Rücksitzbank 300' beziehungsweise der zweisitzigen Rücksitzbank 300", zeigt eine weitere Ausführungsvariante mit einem elastischen Auflagekörper 3A. Die Einzelheit unterhalb der Darstellung 3.2 zeigt eine mehrfach anordbare Rippe 3B, die in jeweils eine angeordnete Schwächung 3D eingreifbar angeordnet ist. Die jeweiligen Schwächungslinien, vertikal verlaufend, sind in den Darstellungen 3.1 beziehungsweise 3.2 sichtbar. Der elastische Auflagekörper 3A ist auf dem Grundkörper-Rückenlehnenteil 1A beziehungsweise auf dem Grundkörper-Sitzteil 2A vollständig angeordnet und die Schwächungen 3D verlaufen sowohl innerhalb des Rückenlehnenteiles als auch des Sitzteiles. Es ist vorgesehen, dass der Auflagekörper 3A durch seine Elastizität beziehungsweise unterstützt durch die schlitzartigen Schwächungen 3D und durch die Anordnung der mindestens einen Rippe 3B der Auflagekörper 3A relativ gegenüber dem Grundkörper-Rückenlehnenteiles 1A und/oder dem Grundkörper-Sitzteil 2A verformt. So zeigt die Darstellung 3.2 eine zweisitzige Rücksitzbank 300", in einer zweisitzigen Position, die durch die Rippe 3B, in zentraler Lage des Grundkörper-Rückenlehnenteils 1A und des Grundkörper-Sitzteils 2A, in die Schwächungslinie 3D eingreift und somit die zweisitzige Rücksitzbank 300" ausbildet. Die Darstellung 3.1 zeigt im Gegensatz dazu, eine links und rechts von einer gedachten Mittellinie des Grundkörper-Rückenlehnenteils 1A symmetrisch angeordnete, durch die in die dort befindlichen Schwächungslinien 3D eingreifende Rippen 3B ausgeformte Sitzform, die eine einsitzige Rücksitzbank 300', mit kleineren, seitlich angeordneten Bereichen, ausbildet. Diese seitlichen Bereiche können, gemäß der obigen Beschreibung, als Gepäckfächer beziehungsweise als Gepäckräume 12A dienen.

Wie Figur 3 ferner zeigt, sind ebenfalls Kopfstützen 1D ausgebildet, die in dieser Ausführungsvariante in einer horizontalen schienenartigen Öffnung 3C im Grundkörper-Rückenlehnenteil 1A verschiebbar angeordnet sind. Wie die Darstellungen 3.1 und 3.2 eindeutig zeigen, werden die Kopfstützen 1D bei der zweisitzigen Rücksitzbank 300" nach außen und bei der einsitzigen Rücksitzbank 300' nach innen verschoben.

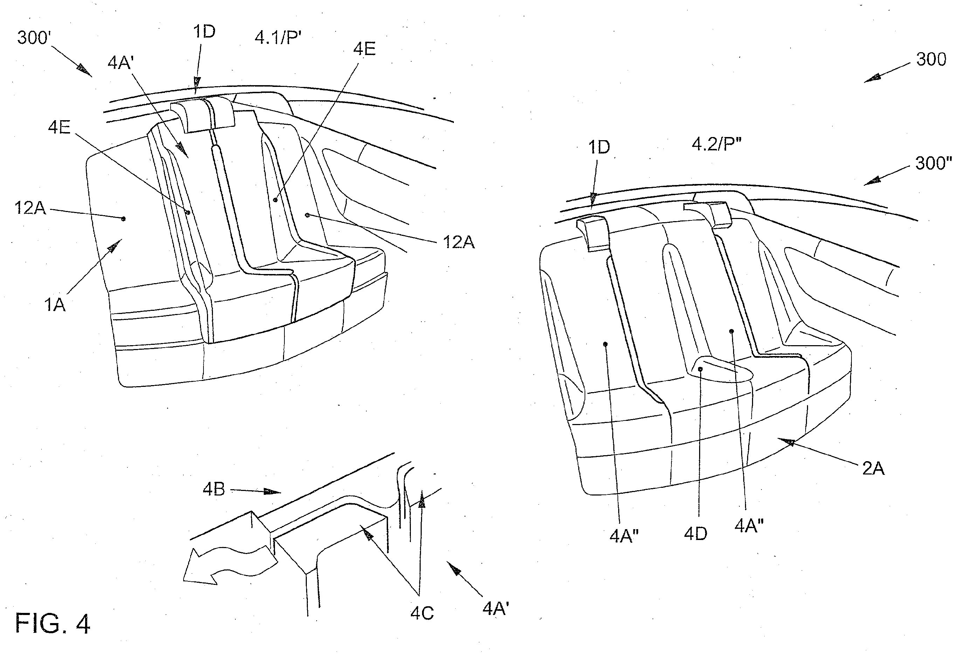

Figur 4 zeigt in Darstellung 4.1 und Darstellung 4.2, sowie einer Einzelheit unterhalb der Darstellung 4.1, den Grundkörper-Rückenlehnenteil mit einem doppellagigen Auflagekörper 4A. Der doppellagige Auflagekörper 4A weist eine untere Auflage 4B und mit einer sich im Wesentlichen über das Grundkörper-Rückenlehnenteil 1A und das Grundkörper-Sitzteil 2A vertikal erstreckenden Wölbung auf. Jeweils seitlich der Wölbung angeordnet sind auf der unteren Auflage 4B obere Auflagen 4C symmetrisch ausgebildet. Figur 4, Darstellung 4.1 zeigt den doppellagigen Auflagekörper 4A' in der einsitzigen Position P', der durch jeweils seitliches Verschieben der zweiteiligen oberen Auflage 4C zu einer zweisitzigen Rücksitzbank 300" in die zweisitzige Position P", gemäß Darstellung 4.2, veränderbar ist. In dieser zweisitzigen Position P" wird gemäß 4.2 die Wölbung, als mittlerer Steg 4D sichtbar, der in dieser Position P" die mittlere Trennung der zweisitzigen Rücksitzbank 300" ausbildet. Ausgehend von Darstellung 4.1 sind in der einsitzigen Position seitliche Stege 4.1 an den Elementen der oberen Auflage 4C als Seitenhaltelemente angeordnet, die in der Darstellung 4.2 der zweisitzigen Position P" zu den Seitenhaltelementen der beiden Sitze umwandelbar sind. Die Darstellung 4.1 zeigt wiederum, dass die links und rechts des doppellagigen Auflagekörpers 4A' vorhandenen Bereich als Gepäckraum 12A in einem Micro-Kompaktfahrzeug dienen.

An jeder oberen Auflage 4C befindet sich vorzugsweise wiederum eine Kopfstütze 1D, gemäß der Darstellung 4.1, unter der Voraussetzung, dass der doppellagige Auflagekörper 4A in der einsitzigen Position P' zu einer Kopfstütze 1D für eine einsitzige Rücksitzbank 300' führt. Werden die oberen Auflagen 4C links beziehungsweise rechts neben die unteren Auflagen 4B verschoben, so verschieben sich die Kopfstützen 1D, wie Darstellung 4.2 zeigt, entsprechend mit und bilden die Kopfstützen für die zweisitzige Rücksitzbank 300".

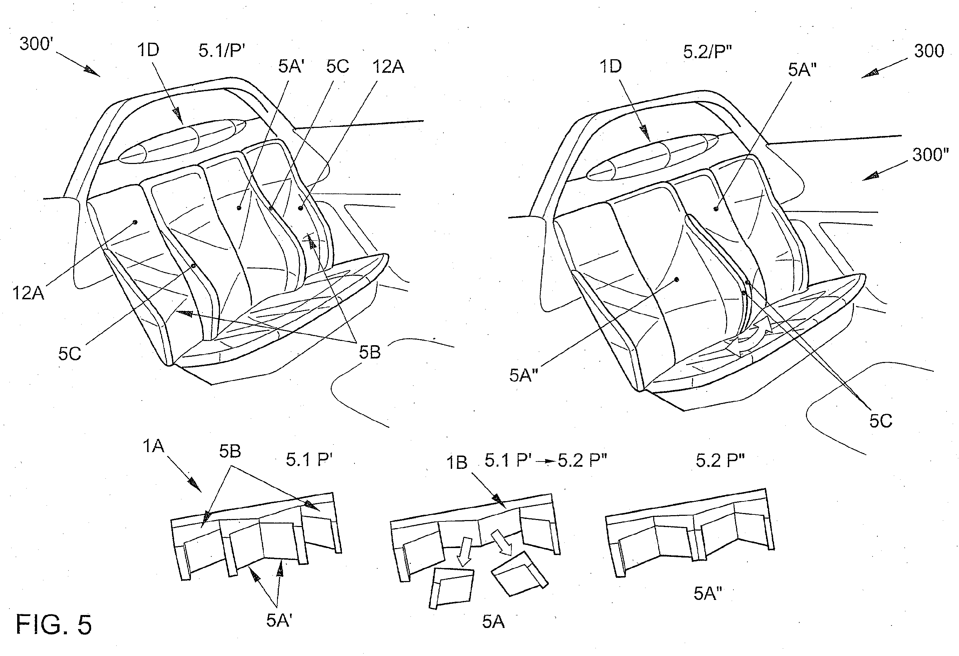

Figur 5 mit den Darstellungen 5.1 und 5.2, sowie den erntsprechend unter den Darstellungen gezeigten Einzelheiten, zeigen den Grundkörper-Rückenlehnenteil 1A, mit einem zweiteiligen Auflageelement 5A, welches in einer zu den Auflageelementen passenden Ausnehmung 1B im Rückenlehnenteil 1A angeordnet ist. In dieser Ausführungsvariante besitzt die Rücksitzbank 300 zudem bereits seitliche Polsterteile 5B, die das zweiteilige Auflageelement 5A von außen auf dem Grundkörper-Rückenlehnenteil 1A oder gegebenenfalls auch auf dem Grundkörper-Sitzteil 2A begrenzen. Die Darstellung 5.1 der Figur 5 zeigt die mit Seitenhaltelementen 5C ausgebildeten zweiteiligen Auflageelemente 5A' in der einsitzigen Position P', also eine einsitzige Rücksitzbank 300'. Wie die Einzelheiten unterhalb der Darstellungen 5.1 und 5.2 zeigen, ist das zweiteilige Auflageelement 5A als ein erstes trapezartiges Auflageelement und als ein zweites trapezartiges Auflageelement mit den Seitenhaltelementen verschiedenster Ausführungsmöglichkeiten ausgebildet. Hier ausgehend von der zweisitzigen Position P" der zweisitzigen Rücksitzbank 300", gemäß Figur 5 Darstellung 5.2, ist das zweiteilige Auflageelement 5A" durch Drehen des ersten trapezartigen Auflageelementes und des zweiten trapezartigen Auflageelementes um zirka 180° in einer vertikalen Ebene oder durch einfaches Vertauschen in die einsitzige Rücksitzbank 300', mit dem zweiteiligen Auflageelement 5A', in die einsitzige Position P' umbaubar. Dies zeigt noch einmal die mittlere Einzelheit unterhalb der Darstellungen 5.1 und 5.2 deutlich, bei der die trapezartigen Auflageelemente aus der einsitzigen Position P' gelöst dargestellt sind und durch ein angedeutetes Drehen innerhalb der vertikalen Ebene vor dem Grundkörper-Rückenlehnenteil 1A in die zweisitzige Position P" verlagerbar sind. In der zweisitzigen Position P" bilden die Seitenhaltelemente die mittlere Trennung zwischen den nun angeordneten Sitzen aus. Darstellung 5.1 zeigt wiederum, dass die seitlichen Bereiche einer einsitzigen Rücksitzbank 300' als zusätzliche Gepäckräume 12A dienen können.

In Figur 5 sind die Kopfstützen 1D am Grundkörper-Rückenlehnenteil 1A derart angeordnet, dass sie sowohl in der einsitzigen Position P' gemäß Figur 5.1 und gemäß der Darstellung 5.2 in der zweisitzigen Position P" als Kopfstützen dienen können. Selbstverständlich ist auch hier eine Anordnung möglich, die insbesondere in Darstellung 5.2 ein vertikales Verschieben der zweigeteilten Kopfstützen möglich macht.

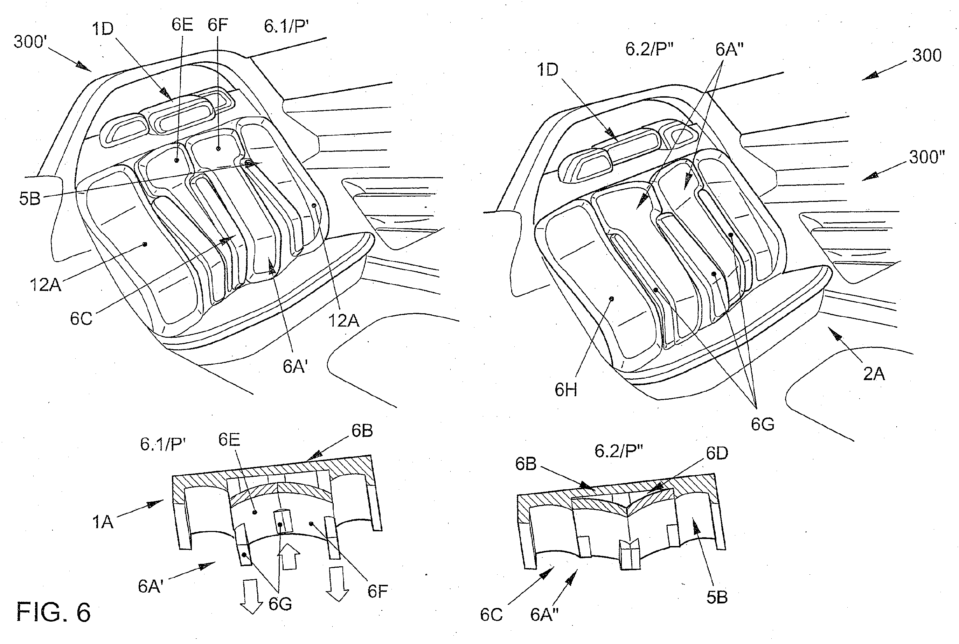

Figur 6 zeigt in Darstellung 6.1 und Darstellung 6.2, sowie den darunter dargestellten zusätzlichen Einzelheiten, ein weiteres bewegliches Teil beziehungsweise weitere bewegliche Teile, welche zur Umgestaltung der Rücksitzbank auf dem Grundkörper-Rückenlehnenteil 1A anordbar sind. Zunächst weist die Rücksitzbank 300 wiederum seitliche Polsterteile 5B oberhalb des Grundkörper-Rückenlehnenteils 1A auf, die zur seitlichen Begrenzung dienen. Ein angeordneter, mehrfach geteilter, Zentralbereich 6C weist ein aufblasbares Auflageelemente 6A auf, welches ein zentrales aufblasbares Element 6D und ein linkes und rechtes aufblasbares Element 6E und 6F aufweist. Die Auflageelemente durchgreifen im unteren Bereich den Zentralbereich 6C.

Je nach entsprechender Vorwahl sind gemäß Darstellung 6.1 die Auflageelemente 6E, 6F so aufblasbar, dass ein großzügiger Einzelsitz der einsitzigen Rücksitzbank 300' entsteht. Zur Ausbildung einer zweisitzigen Rücksitzbank 300", gemäß Darstellung 6.2 und unterer Einzelheit 6.2, werden die Kammern 6B hinter dem linken aufblasbaren Auflageelement 6E und dem rechten aufblasbaren Auflageelement 6F durch Ablassen des Mediums, vorzugsweise Luft, zurückgebildet. Eine mittlere Kammer 6B führt nach Aufblasen des zentralen aufblasbaren Auflageelements 6D, wie in Darstellung 6.2 gezeigt, zu einer zweisitzigen Rücksitzbank 300" mit zwei Sitzen. Diese Lösung kann selbstverständlich sowohl auf dem Grundkörper-Rückenlehnenteil 1A, wie dargestellt, als auch auf dem Grundkörper-Sitzteil 2A angeordnet sein. Zusätzliche Wangen 6G als gewünschte Seitenhaltelemente, die am Rand der linken und rechten Kammer 6B und zwischen der linken und rechten Kammer 6B angeordnet sind, entstehen durch das Durchgreifen der Auflageelemente 6D, 6E, 6F gemäß den Darstellungen 6.1 und 6.2, je nach Zustand der aufblasbaren Auflageelemente 6D, 6E, 6F.

Die hier dargestellte Lösung der Anordnung von Kopfstützen 1D ist aus den Darstellungen 6.1 und 6.2 entnehmbar. Je nach Ausbildung einer einsitzigen Rücksitzbank 300' beziehungsweise zweisitzigen Rücksitzbank 300", werden in dieser Ausführungsvariante die Kopfstützen 1D in oder entgegen der Fahrtrichtung angepasst. In der zweisitzigen Position P" werden die linke und rechte Kopfstütze 1D nach vorn verschoben, während in der einsitzigen Position P' die mittlere Kopfstütze 1D in Fahrtrichtung nach vorn und die linke und rechte Kopfstütze 1D entgegen der Fahrtrichtung nach hinten verschoben werden.

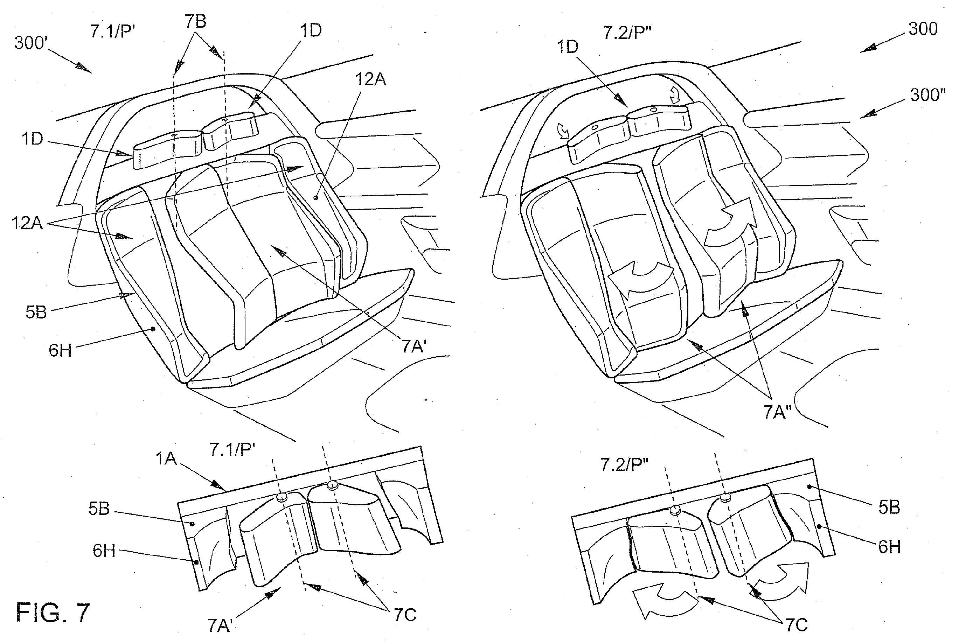

Dem Grundkörper-Rückenlehnenteil 1A und wiederum seitlich angeordneten Polsterelementen 5B, mit entsprechend ausgebildeten Seitenwangen 6H, als bewegliches Teil ist in der Ausführungsvariante gemäß Figur 7 ein zweiteiliges, drehbares Auflageelement 7A angeordnet. Dieses zweiteilige drehbare Auflageelement 7A ist vorzugsweise als ein erstes schalenartiges Auflageelement und als ein zweites schalenartiges Auflageelement, jeweils mit ergonomisch geformten Ausführungen, insbesondere im Beckenbereich eines Insassen, ausgebildet. Gemäß den Darstellungen 7.1 und 7.2, sowie der darunter angeordneten Einzelheiten, ist die zweisitzige Rücksitzbank 300" mit dem zweiteiligen drehbaren Auflageelement 7A" in der zweisitzigen Position P" durch Schwenken des ersten schalenartigen Auflageelementes und des zweiten schalenartigen Auflageelementes jeweils um eine Schwenkachse Auflageelement 7C schwenkbar in eine einsitzige Rücksitzbank 300' mit dem zweiteiligen, drehbaren Auflageelement 7A' in die einsitzige Position P' bringbar.

Die zugehörigen Kopfstützen 1D können entsprechend der einsitzigen beziehungsweise zweisitzigen Position P', P", je nach Auswahl der Sitzposition, mitverändert beziehungsweise angepasst werden.

Darstellung 7.1 der Figur 7 zeigt die einsitzige Position P' der einsitzigen Rücksitzbank 300', mit links und rechts ausgebildeten Freiräumen, die als Gepäckraum 12A dienen können.

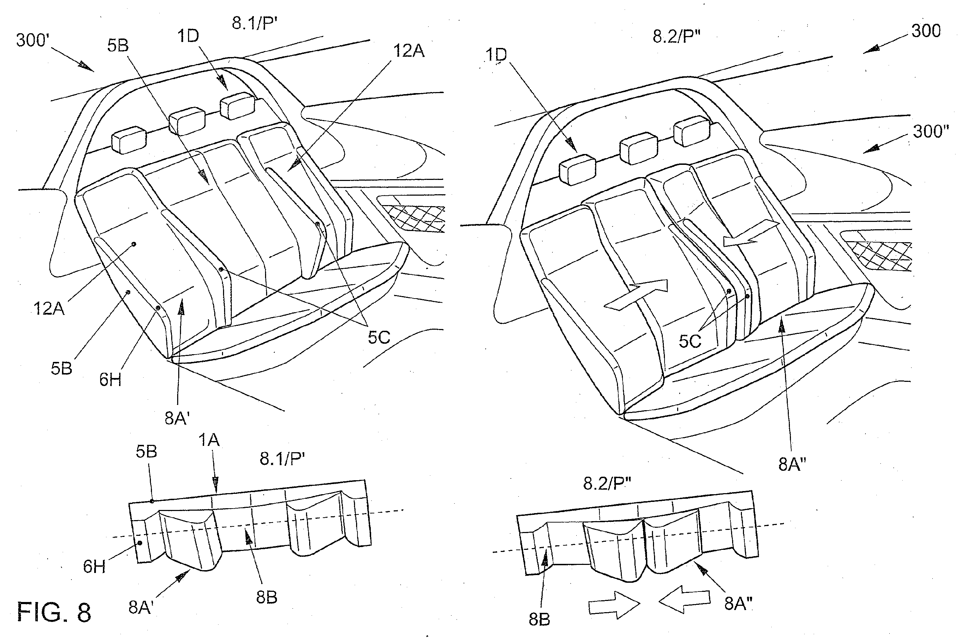

Figur 8 zeigt eine weitere Ausführungsvariante, bei der eine Polsterung aus Polsterteilen 5B wieder unter Ausbildung von Seitenwangen 6H angeordnet ist. Vorzugsweise erhebt sich die Polsterung im Bereich des mittleren Polsterteils 5B stärker vom Grundkörper-Rückenlehnenteil 1A ab als in den seitlichen Bereichen der Polsterung. In diesen seitlichen, durch flachere Polsterung tiefer liegenden Bereichen sind gemäß Darstellung 8.1 als bewegliche Teile verschiebbare Auflageteile 8A' in der einsitzigen Position P' der einsitzigen Rücksitzbank 300' angeordnet. Die verschiebbaren Auflageteile 8A weisen gemäß Darstellung 8.1 zur Mitte hin gerichtete eigene, verschieden ausgestaltbare Seitenwangen auf. Diese Seitenwangen bilden den Seitenhalt der einsitzigen Rücksitzbank 300' aus. Ausgehend von der Darstellung 8.1 ist dieses zweiteilig verschiebbare Auflageteil 8A als ein erstes trapezartiges Auflageteil und als ein zweites trapezartiges Auflageteil ähnlich der Figur 5 ausgebildet. Wie die Figuren zeigen, erfolgt die Umgestaltung der einsitzigen Rücksitzbank 300' gemäß der Abbildung 8.1 in eine zweisitzige Rücksitzbank 300" gemäß Darstellung 8.2 durch Verschieben des ersten trapezartigen Auflageteiles und des zweiten trapezartigen Auflageteiles entlang einer horizontalen Achse 8B von den etwas tiefer liegenden Polsterbereichen in die etwas höher liegende mittige Polsterung des Grundkörper-Rückenlehnenteils 1A. Die beschriebene verschiedene Dicke der Polsterung im Außenbereich beziehungsweise im mittigen Bereich ist jedoch nicht unbedingt notwendig.

Darstellung 8.1 zeigt in der einsitzigen Position P' die ausgebildeten Gepäckräume 12A links und rechts des mittleren Polsterteils 5B auf dem verschiebbaren Auflageteil 8A'.

Durch dreifache Anordnung steht dem Insassen gemäß Figur 8 stets eine Kopfstütze 1D zur Verfügung.

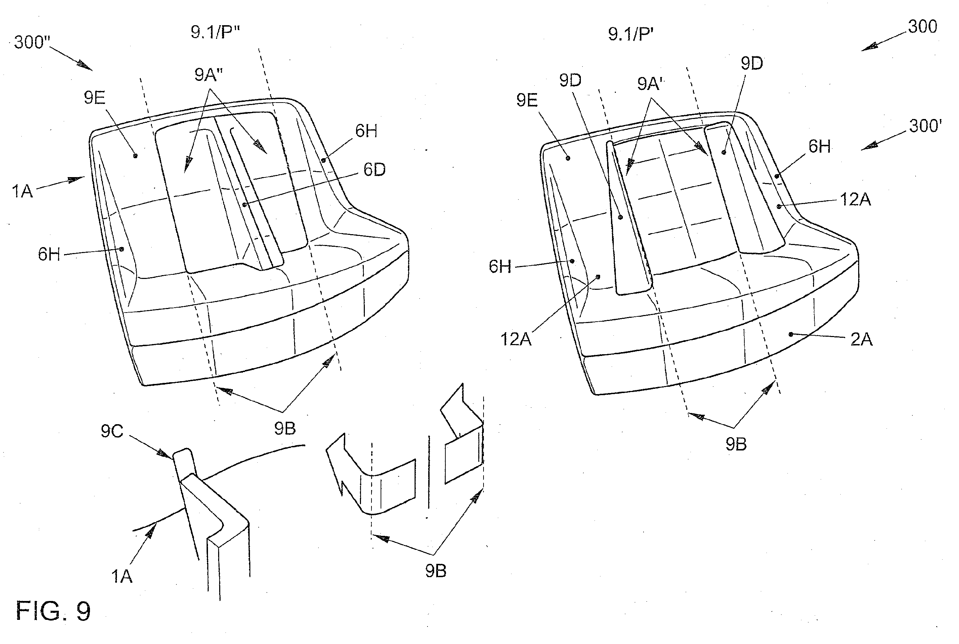

Figur 9 zeigt eine Grundpolsterung als Auflage 9E auf dem Grundkörper-Rückenlehnenteil 1A. Analog zu den vorhergehenden Figuren ist wiederum zwischen den Seitenwangen 6H der Auflage 9E ein zweiteiliges klappbares Auflageelement 9A angeordnet. Gemäß Darstellung 9.1 der Figur 9 ist im Grundkörper-Rückenlehnenteil 1A, die Auflage 9E durchgreifend, eine Stecköffnung 9C angeordnet, in dem die zweiteiligen klappbaren Auflageelemente 9A in der einsitzigen Position verankert sind und gemäß Darstellung 9.1 Seitenwangenwinkel 9D bilden. Die Auflage 9E bildet zwischen den Seitenwangenwinkeln der einsitzigen Position eine tiefer liegendes Polster aus. Seitlich davon bilden sich die entsprechenden Gepäckräume 12A in der einsitzigen Position P' aus. Die einsitzige Rücksitzbank 300' mit dem zweiteiligen, klappbaren Auflageelement 9A' in der einsitzigen Position P' ist durch Herausziehen aus den Stecköffnungen 9C und durch Klappen des zweiteiligen Auflageelementes 9A um im Wesentlichen 90° um jeweils eine vertikale Klappachse 9B, wie die Darstellungen 9.1 und 9.2 zeigen, in die zweisitzige Rücksitzbank 300" in der zweisitzigen Position P" umgestaltbar. Die Seitenwangenwinkel 9D bilden nun den mittleren Seitenhalt für die zweisitzige Rücksitzbank 300" neben den im Polsterbereich angeordneten Seitenwangen 6H aus. Eine Anordnung der Kopfstützen 1D ist in Figur 9 nicht dargestellt, kann jedoch erfindungsgemäß aus den bereits beschriebenen Figuren analog entnommen und angeordnet werden.

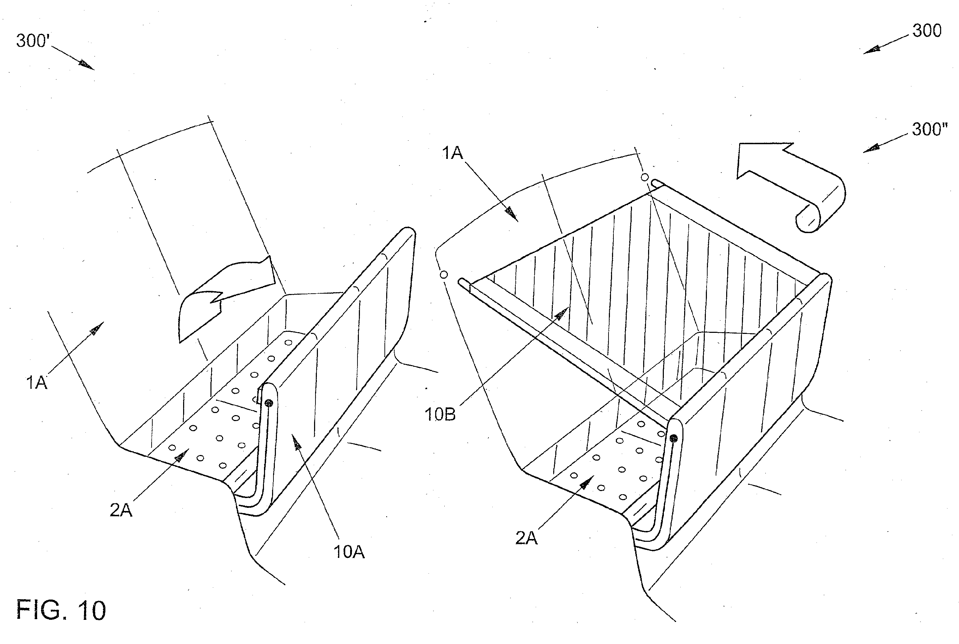

Figur 10 zeigt schließlich die Rücksitzbank 300, bei der ein Sitzteil-Auflage 10A vom Grundkörper-Sitzteil 2A um eine Schwenkachse klappbar angeordnet ist. Unterhalb der Sitzteil-Auflage 10A ist eine Abdeckung 10B in der Art eines entfaltbaren Rollos oder dergleichen angeordnet, die aus der Sitzteil-Auflage 10A heraus ausbildbar ist und in dem Grundkörper-Rückenlehnenteil 1A durch geeignete Einrichtungen befestigbar ist. Figur 10 zeigt nur andeutungsweise den Grundkörper-Rückenlehnenteil 1A. Selbstverständlich kann der Grundkörper-Rückenlehnenteil in einer der beschriebenen Ausführungsvarianten der Figuren 1 bis 9 ausgestaltet sein, so dass eine Abdeckung des Rückenlehnenteiles unabhängig von der einsitzigen oder zweisitzigen Position P', P" möglich ist. Außerdem kann die Anordnung in einsitziger oder zweisitziger Position P', P" auf dem Grundkörper-Sitzteil 2A angeordnet sein, unabhängig davon, ob diese in Figur 10 gezeigte Lösung zusätzlich angeordnet ist.

### BEZUGSZEICHENLISTE

- 100: Sitzanordnung
- 200: Vordersitzbank
- 200': einsitzige Vordersitzbank
- 300: Rücksitzbank
- 300': einsitzige Rücksitzbank
- 300": zweisitzige Rücksitzbank
- P': einsitzige Position
- P": zweisitzige Position
- 1A: Grundkörper-Rückenlehnenteil
- 1B: Ausnehmung Rückenlehnenteil
- 1C: einteiliges Auflageelement-Rückenlehnenteil
- 1D: Kopfstütze
- 1E: vertikale Achse
- 1F: Aufwölbung-Rückenlehnenteil
- 2A: Grundkörper-Sitzteil
- 2B: Ausnehmung Sitzteil
- 2C: einteiliges Auflageelement-Sitzteil
- 2F: Aufwölbung-Sitzteil
- 3A: elastischer Auflagekörper
- 3B: Rippe
- 3C: Öffnung
- 3D: Schwächung
- 4A: doppellagiger Auflagekörper
- 4B: untere Auflage
- 4C: obere Auflage
- 4D: mittlerer Steg (Aufwölbung)
- 4E: seitlicher Steg
- 5A: zweiteiliges Auflageelement
- 5B: Polsterteile
- 5C: Seitenhaltelemente
- 6A: aufblasbares Element
- 6B: Kammern
- 6C: Zentralbereich
- 6D: zentrales aufblasbares Element
- 6E: linkes aufblasbares Element
- 6F: rechtes aufblasbares Element
- 6H: Seitenwange
- 6G: Wangen
- 7A: zweiteiliges drehbares Auflageelemente
- 7B: Schwenkachse Kopfstütze
- 7C: Schwenkachse Auflageelement drehbar
- 8A: verschiebbares Auflageteil
- 8B: horizontale Achse
- 9A: zweiteiliges klappbares Auflageelemente
- 9B: Klappachse
- 9C: Stecköffnung
- 9D: Seitenwangenwinkel
- 9E: Auflage
- 10A: Sitzteil-Auflage
- 10B: Abdeckung
- 11A: Einzelsitz-Auflageteil
- 11B: Schwenkführung
- 11C: Schwenkvorrichtung
- 11D: Einzelsitz (karosseriefest)
- 12A: Gepäckraum

## Patentansprüche

1. Sitzanordnung (100) in einem Fahrzeug, insbesondere in einem Micro-Kompaktfahrzeug, die mindestens eine einsitzige Vordersitzbank (200') und mindestens eine zweisitzige Rücksitzbank (300") aufweist, wobei Vordersitzbank (200) und Rücksitzbank (300) jeweils mindestens einen Grundkörper-Sitzteil (2A) und mindestens einen Grundkörper-Rückenlehnenteil (1A) umfasst,
**dadurch gekennzeichnet, dass**
die mindestens eine zweisitzige Rücksitzbank (300") durch auf dem Grundkörper-Rückenlehnenteil (1A) und/oder auf dem Grundkörper-Sitzteil (2A) angeordnete bewegliche Teile (1C, 2C, 3A, 4A, 5A, 6A, 7A, 8A, 9A) im Wesentlichen so veränderbar ist, dass aus einer zweisitzigen Rücksitzbank (300") eine einsitzige Rücksitzbank (300') und umgekehrt ausbildbar ist.

2. Sitzanordnung nach Anspruch 1,
**dadurch gekennzeichnet, dass**
die einsitzige Rücksitzbank (300') mit der einsitzigen Vordersitzbank (200') fluchtend angeordnet ist, wenn die beweglichen Teile (1C, 2C, 3A, 4A, 5A, 6A, 7A, 8A, 9A) in einer einsitzigen Position (P') angeordnet sind.

3. Sitzanordnung nach Anspruch 1,
**dadurch gekennzeichnet, dass**
seitlich der Teile (1C, 2C, 3A, 4A, 5A, 6A, 7A, 8A, 9A) neben der einsitzigen Rücksitzbank (300') nach deren Verlagerung in die einsitzige Position (P') mindestens ein Gepäckraum (12A) ausbildbar ist.

4. Sitzbank (100), insbesondere Rücksitzbank nach Anspruch 1, die mindestens einen Grundkörper-Sitzteil (2A) und mindestens einen Grundkörper-Rückenlehnenteil (1A) umfasst,
**gekennzeichnet durch**
auf dem Grundkörper-Rückenlehnenteil (1A) und/oder auf dem Grundkörper-Sitzteil (2A) angeordnete bewegliche Teile (1C, 2C, 3A, 4A, 5A, 6A, 7A, 8A, 9A), die im Wesentlichen eine Umwandlung der zweisitzigen Rücksitzbank (300") zu einer einsitzigen Rücksitzbank (300') ermöglichen.

5. Sitzbank nach Anspruch 4,
**dadurch gekennzeichnet, dass**
das bewegliche Teil ein einteiliges Auflageelement-Rückenlehnenteil (1C) und das bewegliche Teil ein einteiliges Auflageelement-Sitzteil (2C) ist.

6. Sitzbank nach Anspruch 5,
**dadurch gekennzeichnet, dass**
die zweisitzige Rücksitzbank (300") mit den Auflageelementen (1C", 2C") in der zweisitzigen Position (P") in die einsitzige Rücksitzbank (300') in die einsitzige Position (P') zu den Auflageelementen (1C' und 2C') und umgekehrt umwandelbar ist, da die Auflageelemente (1C, 2C) im Wesentlichen um 180° an einer vertikale Schwenkachse (1 E) drehbar sind.

7. Sitzbank nach Anspruch 5 und 6,
**dadurch gekennzeichnet, dass**
der Grundkörper-Rückenlehnenteil (1A) beziehungsweise der Grundkörper-Sitzteil (2A) mindestens eine Ausnehmung (1B, 2B) aufweisen, in die eine Aufwölbung-Rückenlehnenteil (1F) beziehungsweise eine Aufwölbung-Sitzteil (2F) der Auflageelemente (1C' und 2C') in der einsitzigen Position (P') eingreifen.

8. Sitzbank nach Anspruch 5 bis 7,
**dadurch gekennzeichnet, dass**
die Aufwölbung-Rückenlehnenteil (1F) und die Aufwölbung-Sitzteil (2F) der Auflageelemente (1C", 2C") in der zweisitzigen Position (P") die mittlere Trennung der zweisitzigen Rücksitzbank (300") ausbilden.

9. Sitzbank nach Anspruch 4,
**dadurch gekennzeichnet, dass**
das bewegliche Teil ein elastischer Auflagekörper (3A) ist, der sowohl auf dem Grundkörper-Rückenlehnenteil (1A) als auch auf dem Grundkörper-Sitzteil (2A) anordbar ist.

10. Sitzbank nach Anspruch 9,
**dadurch gekennzeichnet, dass**
die zweisitzige Rücksitzbank (300") mit dem elastischen Auflagekörper (3A") in der zweisitzigen Position (P") durch mindestens eine hinter dem elastischen Auflagekörper angeordnete Rippen (3B) in eine einsitzige Rücksitzbank (300') in die einsitzige Position (P') zu dem elastischen Auflagekörper (3A') verformbar ist.

11. Sitzbank nach Anspruch 9 und 10,
**dadurch gekennzeichnet, dass**
aus dem Bereich des Grundkörper-Rückenlehnenteils (1A) beziehungsweise dem Bereich des Grundkörper-Sitzteils (2A) die mindestens eine Rippe (3B) in eine angeordnete Schwächung (3D) des elastischen Auflagekörpers (3A) eingreift, wobei mindestens eine mittlere Schwächung (3D) des elastischen Auflagekörpers (3A) zur Ausbildung des elastischen Auflagekörpers (3A") in einer zweisitzigen Position (P") eine mittlere Wulst (3E) ausbildbar ist oder mindestens eine Rippe (3B) in jeweils eine seitliche Schwächung (3D) des elastischen Auflagekörpers (3A) eingreift, um den elastischen Auflagekörper (3A') in einer einsitzigen Position (P') mit einer linken und rechten Wulst (3F, 3G) auszubilden.

12. Sitzbank nach Anspruch 4,
**dadurch gekennzeichnet, dass**
das bewegliche Teil ein doppellagiger Auflagekörper (4A) ist, der sowohl auf dem Grundkörper-Rückenlehnenteil (1A) als auch auf dem Grundkörper-Sitzteil (2A) anordbar ist.

13. Sitzbank nach Anspruch 12,
**dadurch gekennzeichnet, dass**
der doppellagige Auflagekörper (4A) aus einer unteren Auflage (4B) und einer zweiteiligen oberen Auflage (4C) ausgebildet ist.

14. Sitzbank nach Anspruch 12 und 13,
**dadurch gekennzeichnet, dass**
die einsitzige Rücksitzbank (300') mit dem doppellagigen Auflagekörper (4A') in der einsitzigen Position (P') durch jeweils seitliches Verschieben der zweiteiligen oberen Auflage (4C) in die zweisitzige Rücksitzbank (300") in die zweisitzige Position (P") veränderbar ist.

15. Sitzbank nach Anspruch 12 bis 14,
**dadurch gekennzeichnet, dass**
die untere Auflage (4B) einen mittleren Steg (4D) aufweist, der nach dem Verschieben der oberen Auflage (4C) die mittlere Trennung der zweisitzigen Rücksitzbank (300") ausbildet.

16. Sitzbank nach Anspruch 12 bis 15,
**dadurch gekennzeichnet, dass**
die obere Auflage (4C) jeweils einen seitlichen Steg (4E) aufweist, der in der einsitzigen Position (P') und der zweisitzigen Position (P") den seitlichen Halt gewährleistet.

17. Sitzbank nach Anspruch 4,
**dadurch gekennzeichnet, dass**
das bewegliche Teil ein zweiteiliges Auflageelement (5A) ist, das sowohl auf dem Grundkörper-Rückenlehnenteil (1A) als auch auf dem Grundkörper-Sitzteil (2A) anordbar ist.

18. Sitzbank nach Anspruch 17,
**dadurch gekennzeichnet, dass**
das zweiteilige Auflageelement (5A) als ein erstes trapezartiges Auflageelement und als ein zweites trapezartiges Auflageelement jeweils mit Seitenhaltelementen (5C) ausgebildet ist.

19. Sitzbank nach Anspruch 17 und 18,
**dadurch gekennzeichnet, dass**
auf dem Grundkörper-Rückenlehnenteil (1A) und/oder dem Grundkörper-Sitzteil (2A) in einem linken und rechten Teilbereich ein linkes und rechtes Polsterteil (5B) mit Seitenhaltelementen (5C) angeordnet ist.

20. Sitzbank nach Anspruch 17 bis 19,
**dadurch gekennzeichnet, dass**
die zweisitzige Rücksitzbank (300") mit dem zweiteiligen Auflageelement (5A") in der zweisitzigen Position (P") durch Drehen des ersten trapezartigen Auflageelementes und des zweiten trapezartigen Auflageelementes um zirka 180° in der vertikalen Ebene oder durch einfaches Vertauschen in eine einsitzige Rücksitzbank (300') mit dem zweiteiligen Auflageelement (5A') in die einsitzige Position (P') umbaubar ist.

21. Sitzbank nach Anspruch 4,
**dadurch gekennzeichnet, dass**
das bewegliche Teil ein aufblasbares Auflageelement (6A) ist, das sowohl auf dem Grundkörper-Rückenlehnenteil (1A) als auch auf dem Grundkörper-Sitzteil (2A) anordbar ist.

22. Sitzbank nach Anspruch 21,
**dadurch gekennzeichnet, dass**
mindestens eine aufgeblasene linke und rechte Kammer (6B) der zweisitzigen Rücksitzbank (300") in einer zweisitzigen Position (P') mit dem aufgeblasenen Auflageelement (6A"), welches ein linkes aufblasbares Element (6E) und ein rechtes aufblasbares Element (6F) aufweist, in eine einsitzige Rücksitzbank (300') in die einsitzige Position (P'), durch eine aufgeblasene zentrale Kammer (6B), welche ein zentral aufblasbares Element (6D) ausbildet, zu dem im zentralen Bereich aufgeblasenen Auflageelement (6A') umgestaltbar ist.

23. Sitzbank nach Anspruch 21 und 22,
**dadurch gekennzeichnet, dass**
auf dem Grundkörper-Rückenlehnenteil (1A) und/oder Grundkörper-Sitzteil (2A) in einem linken und rechten Teilbereich ein linkes und rechtes Polsterteil (5B) jeweils mit Seitenwangen (6H) angeordnet ist.

24. Sitzbank nach Anspruch 21 bis 23,
**dadurch gekennzeichnet, dass**
auf dem Grundkörper-Rückenlehnenteil (1A) und/oder dem Grundkörper-Sitzteil (2A) am Rand der linken und rechten Kammer (6B) und zwischen der linken und rechten Kammer (6B) jeweils eine Wange (6G) angeordnet ist.

25. Sitzbank nach Anspruch 4,
**dadurch gekennzeichnet, dass**
das bewegliche Teil ein zweiteiliges drehbares Auflageelement (7A) ist, das sowohl auf dem Grundkörper-Rückenlehnenteil (1A) als auch auf dem Grundkörper-Sitzteil (2A) anordbar ist.

26. Sitzbank nach Anspruch 25,
**dadurch gekennzeichnet, dass**
zweiteilige drehbare Auflageelemente (7A) als ein erstes schalenartiges Auflageelement und als ein zweites schalenartiges Auflageelement jeweils mit ergonomisch geformten Ausformungen, insbesondere im Beckenbereich eines Insassen, ausgebildet sind.

27. Sitzbank nach Anspruch 25 und 26,
**dadurch gekennzeichnet, dass**
auf dem Grundkörper-Rückenlehnenteil (1A) und/oder einem Grundkörper-Sitzteil (2A) in einem linken und rechten Teilbereich ein linkes und rechtes Polsterteil (5B) mit Seitenwangen (6H) angeordnet ist.

28. Sitzbank nach Anspruch 25 bis 27,
**dadurch gekennzeichnet, dass**
die zweisitzige Rücksitzbank (300") mit dem zweiteiligen drehbaren Auflageelement (7A") in der zweisitzigen Position (P") durch Schwenken des ersten schalenartigen Auflageelementes und des zweiten schalenartigen Auflageelementes jeweils um eine Schwenkachse Auflageelement (7C) schwenkbar in eine einsitzige Rücksitzbank (300') mit dem zweiteiligen drehbaren Auflageelement (7A') in die einsitzige Position (P') bringbar ist.

29. Sitzbank nach Anspruch 4,
**dadurch gekennzeichnet, dass**
das bewegliche Teil ein zweiteiliges verschiebbares Auflageteil (8A) ist, das sowohl auf dem Grundkörper-Rückenlehnenteil (1A) als auch auf dem Grundkörper-Sitzteil (2A) anordbar ist.

30. Sitzbank nach Anspruch 29,
**dadurch gekennzeichnet, dass**
das zweiteilige verschiebbare Auflageteil (8A) als ein erstes trapezartiges Auflageteil und als ein zweites trapezartiges Auflageteil jeweils mit Seitenhaltelementen (5C) ausgebildet ist.

31. Sitzbank nach Anspruch 29 und 30,
**dadurch gekennzeichnet, dass**
auf dem Grundkörper-Rückenlehnenteil (1A) und/oder einem Grundkörper-Sitzteil (2A) in einem linken und rechten Teilbereich ein linkes und rechtes Polsterteil (5B) mit Seitenwangen (6H) angeordnet ist.

32. Sitzbank nach Anspruch 29 bis 31,
**dadurch gekennzeichnet, dass**
die zweisitzige Rücksitzbank (300") mit dem zweiteiligen verschiebbaren Auflageteil (8A") in der zweisitzigen Position (P") durch jeweils Verschieben des ersten trapezartigen Auflageteiles und des zweiten trapezartigen Auflageteiles entlang einer horizontalen Achse (8B) in eine einsitzige Rücksitzbank (300') mit dem zweiteiligen verschiebbaren Auflageteil (8A') in die einsitzige Position (P') umgestaltbar ist.

33. Sitzbank nach Anspruch 4,
**dadurch gekennzeichnet, dass**
das bewegliche Teil ein zweiteiliges klappbares Auflageelement (9A) ist.

34. Sitzbank nach Anspruch 33,
**dadurch gekennzeichnet, dass**
die zweisitzige Rücksitzbank (300") mit dem zweiteiligen klappbaren Auflageelement (9A") in der zweisitzigen Position (P") durch Klappen des zweiteiligen Auflageelementes (9A) um im Wesentlichen 90°, um mindestens eine vertikale Klappachse (9B) in die einsitzige Rücksitzbank (300') in die einsitzige Position (P') zu dem zweiteiligen klappbaren Auflageelement (9A') und umgekehrt veränderbar ist.

35. Sitzbank nach Anspruch 33 und 34,
**dadurch gekennzeichnet, dass**
der Grundkörper-Rückenlehnenteil (1A) beziehungsweise der Grundkörper-Sitzteil (2A) eine Auflage (9E) und mindestens eine Stecköffnung (9C) aufweisen, in die jeweils ein Teil des zweiteiligen klappbaren Auflageelementes (9A') zur Ausbildung der einsitzigen Position (P') der einsitzigen Rücksitzbank (300') mit sich ausbildenden seitlichen Seitenwangenwinkeln (9D) eingreifen.

36. Sitzbank nach Anspruch 33 bis 35,
**dadurch gekennzeichnet, dass**
die auf dem Grundkörper-Rückenlehnenteil (1A) und/oder dem Grundkörper-Sitzteil (2A) angeordnete Auflage (9E) und deren Seitenwangen (6H) bei einem zweiteiligen klappbaren Auflageelement (9A") in der zweisitzigen Position (P") die zweisitzige Rücksitzbank (300") mit mittleren Seitenwangenwinkeln (9D)ausbilden.

37. Sitzanordnung (100) in einem Fahrzeug, insbesondere in einem Micro-Kompaktfahrzeug, die mindestens eine einsitzige Vordersitzbank (200') und mindestens eine zweisitzige Rücksitzbank (300") aufweist, wobei die zweisitzige Rücksitzbank (300") mindestens zwei quer zu einer Fahrtrichtung angeordnete Einzelsitze umfasst,
**dadurch gekennzeichnet, dass**
die zweisitzige Rücksitzbank (300") durch ein bewegliches Einzelsitz-Auflageteil (11A) durch seitliches Verschwenken auf einen karosseriefesten Einzelsitz (11D) in eine einsitzige Position (P') zu einer einsitzigen Rücksitzbank (300') reversibel überführbar ist.

38. Sitzanordnung nach Anspruch 37,
**dadurch gekennzeichnet, dass**
der karosseriefeste Einzelsitz (11D) mit dem seitlich verschwenkten Einzelsitz-Auflageteil (11A) mit der einsitzigen Vordersitzbank (200') in Fahrtrichtung wahlweise fluchtend oder nicht fluchtend angeordnet ist.

39. Sitzanordnung nach Anspruch 38,
**dadurch gekennzeichnet, dass**
nach Verlagerung des verschwenkbaren Einzelsitz-Auflageteiles (11A) auf den karosseriefesten Einzelsitz (11D) neben der entstandenen einsitzigen Rücksitzbank (300') mindestens ein Gepäckraum (12A) angeordnet ist.

40. Sitzbank insbesondere Rücksitzbank nach Anspruch 37, die zwei quer zur Fahrtrichtung an der Karosserie angeordnete Einzelsitze umfasst,
**dadurch gekennzeichnet, dass**
der mindestens eine Einzelsitz (11D) karosseriefest an einem Grundkörper-Rückenlehnenteil (1A) angeordnet ist und mindestens ein seitlich verschwenkbares Einzelsitz-Auflageteil (11A) auf den karosseriefesten Einzelsitz (11D) schwenkbar ist.

41. Sitzbank, insbesondere Rücksitzbank nach Anspruch 40,
**dadurch gekennzeichnet, dass**
die einsitzige Rücksitzbank (300') mit dem verschwenkbaren Einzelsitz-Auflageteil (11A') in einer einsitzigen Position (P') durch seitliches Verschwenken mittels einer Schwenkführung (11B) und/oder einer Schwenkvorrichtung (11C), die in dem Grundkörper-Rückenlehnenteil (1A) angeordnet ist, in eine zweisitzige Rücksitzbank (300") mit dem Einzelsitz-Auflageteil (11A") in eine zweisitzige Position (P") auf den Einzelsitz (11D) reversibel umgestaltbar ist.
